(19) **Europäisches Patentamt**

**European Patent Office**

**Office européen des brevets**

(11) **EP 0 440 868 B2**

(12) **NEUE EUROPÄISCHE PATENTSCHRIFT**

(45) Veröffentlichungstag und Bekanntmachung des Hinweises auf die Entscheidung über den Einspruch:
**21.08.1996 Patentblatt 1996/34**

(51) Int Cl.⁶: **H02P 7/747**, C21C 5/50

(45) Hinweis auf die Patenterteilung:
**12.01.1994 Patentblatt 1994/02**

(21) Anmeldenummer: **90102596.5**

(22) Anmeldetag: **09.02.1990**

(54) **Regelung für einen mehrmotorigen Konverterkippantrieb**

Control for a plural motor converter tilting drive

Régulation pour la commande du basculement d'un convertisseur à plusieurs moteurs

(84) Benannte Vertragsstaaten:
**AT BE CH DE FR GB IT LI LU SE**

(43) Veröffentlichungstag der Anmeldung:
**14.08.1991 Patentblatt 1991/33**

(73) Patentinhaber: **SIEMENS AKTIENGESELLSCHAFT**
**80333 München (DE)**

(72) Erfinder:
- **Meyer, Hermann**
  **D-8520 Erlangen (DE)**
- **Weisshaar, Bernhard**
  **D-8522 Herzogenaurach (DE)**
- **Frodermann, Bernd**
  **D-8521 Weisendorf (DE)**
- **Ossendoth, Udo Dr.**
  **D-4320 Hattingen (DE)**

(56) Entgegenhaltungen:
DE-A- 2 229 850          DE-C- 3 641 569
US-A- 4 418 301

- **ELEKTROTECHNIK UND INFORMATIONSTECHNIK, vol. 105, no. 10, Oktober 1988, Wien, AT, Seiten 467-469; D. REINERS : "Antriebstechnik im Automatisierungsverbund"**
- **ANTRIEBSTECHNIK, vol. 26, no. 6, 1987, Mainz, DE, Seiten 30-34; T.EEROLA : "Voll digitaler Drehstrom-Mehrmotorenantrieb"**
- **STAHL UND EISEN, vol. 101, no. 10, 18. Mai 1981, Seiten 33-39 ; E. BRAUN et al. : "Das Antriebssystem von Grosskonvertern-Projektierung und Betriebserfahrungen mit dem Viermotorenantrieb"**
- **Technische Mitteilung AEG-Telefunken 66 (1976) Heft 6, Seiten 244-249, Pfuhl, Raatz und Vrhovnik: " Reglung von Grosskonvertern ".**
- **IFAC-Symposium on Power Electronics and Electrical Drives, Düsseldorf 1974, vol. 2, Seiten 301-316, Klittich: "Entwurf und Inbetriebnahme des Nachfuhr und Positioniersystems für das Radioteleskop Effelsberg".**
- **AEG-Telefunken Handbücher Band 16, 1978, Seiten 65 und 68, Buxbaum und Schierau: "Berechnung von Regelkreisen der Antriebstechnik".**

**Beschreibung**

Die Erfindung betrifft eine Regelung für einen mehrmotorigen Konverterkippantrieb mit mehreren Antriebsmotoren nach dem Oberbegriff des Anspruches 1.

Die Antriebssysteme von Konvertern, insbesondere von Großkonvertern, unterliegen hohen Anforderungen. Schwingungen und Drehmomentspitzen führen an den Konverterantrieben zu schwer erfassbaren Überlastungen, die zu Schäden im Antriebssystem führen können und die Verfügbarkeit herabsetzen. Die Betriebserfahrungen zeigen immer wieder Getriebeschäden und Motorausfälle. Das schwingungsfähige System Konverter-Kippantrieb wurde daher schon eingehend untersucht und regelungstechnisch an den neuesten Stand der Technik angepaßt. Eine Regelung der eingangs angegebenen Art wird im Heft 10, "Stahl und Eisen", 101, 1981, Seiten 33-39 beschrieben.

Diese bekannte Regelung arbeitet mit einer Drehzahlmessung an jedem Motor. Die Antriebsregelung für die Antriebsmotoren ist als Summendrehzahlregelung ausgebildet. Den Stromsollwerten der Einzelantriebe wird als Störgröße das durch Differentiation der jeweiligen Antriebsdrehzahl gewonnene Beschleunigungsmoment negativ aufgeschaltet. Neben der Regelung der Summe aller Drehzahlen ist noch ein Differenzdrehzahlregelkreis vorgesehen, der die Differenzdrehzahlen der einzelnen Motoren ausregelt.

Die zitierte schnelle Regelung ist für Konverter-Kippantriebe bereits gut geeignet, wie die Simulationsergebnisse in der Veröffentlichung gezeigt haben. Nachteilig ist jedoch, daß auch mit dieser Regelung Getriebeschaden und Motorausfälle durch Gegeneinanderschwingen der einzelnen Motoren nicht vermieden werden können und daß eine Einbindung in das Kommunikations- und Überwachungssystem eines Stahlwerks nur aufwendig möglich ist. Desweiteren ist nachteilig, daß eine notwendige Veränderung der einzelnen Regelstrukturen bzw. Regelcharakteristiken nur schwer möglich ist und längere Einstellungs- und Anpassungsperioden erfordert.

Aus "Elektrotechnik und Informationstechnik", 105 (1988), Heft 10, Seiten 467-469, ist ein Mehrmotoren-Antriebssystem mit Antriebsreglern in digitalen speicherprogrammierbaren Recheneinheiten für pulsumrichtergespeiste Drehstrommotoren bekannt. Allerdings werden die Motoren nicht gemeinsam über einen Summendrehzahlregelkreis geregelt, so daß hier nicht das Problem des Gegeneinanderschwingens der einzelnen Motoren auftritt.

Entsprechendes gilt auch für ein aus "Antriebstechnik", 26 (1987), Nr. 6, Seiten 30 bis 34, bekanntes Mehrmotoren-Antriebssystem mit digitaler Vektorregelung für pulsumrichtergespeiste Drehstrommotoren.

Es ist Aufgabe der Erfindung, eine Regelung anzugeben, die die vorstehenden Nachteile vermindert oder völlig vermeidet und insbesondere die Verfügbarkeit des Antriebssystems erhöht.

Die Aufgabe wird durch die in dem Patentanspruch 1 angegebene Regelung gelöst. Durch die Verwendung der Digitaltechnik anstelle der Analogtechnik der bekannten Konverter-Kippantriebsregelungen wird bei geeigneter Wahl und Optimierung der Zykluszeiten die Regeldynamik gegenüber einer anlogen Regelung nicht verschlechtert. Vorteile ergeben sich aber aus der optimalen Ausbildbarkeit der Regelung und ihre Kommunikationsfähigkeit. Sowohl Praxis als auch Simulation haben gezeigt, daß die Schwingungen der einzelnen Antriebsmotoren gegeneinander für das Kippgetriebe kritischer sind, als die Schwingung des Konverters gegen die Antriebseinheit. Durch die Differenzdrehzahldämpfung ergibt sich in vorteilhafter Weise eine weitestgehende Unterdrückung der schädlichen Einflüsse des Gegeneinanderschwingens der Einzelmotoren und eine wesentliche Erhöhung der Betriebssicherheit des Getriebes und ein besserer Drehmomentverlauf an der Konverterachse. Dabei erfolgt die Differenzdrehzahldämpfung nach der Übertragungsfunktion

$$F_D(s) = K^* \frac{sTv}{1+sT_v.}$$

In Ausgestaltung der Erfindung ist vorgesehen, daß beim Einsatz der Drehstromtechnik das Prinzip der Vektorrechner eingesetzt wird. Hierdurch ergibt sich trotz der Digitalisierung der einzelnen Regelungsabläufe vorteilhaft eine sehr hohe Regelgeschwindigkeit, die auch für den schwierigen Anwendungsfall der Regelung von Konverter-Kippantrieben ausreichend hoch ist. Die erzielbare Regeldynamik ist mit der von Gleichstromantrieben vergleichbar.

Durch die Einführung von Drehmomentenverspannungskennlinien in den Stromregelungen der Einzelantriebe, vorteilhaft Drehstromantriebe, wird eine ruckfreie Umsteuerung des Antriebs erreicht. Zusammen mit einer rampenförmigen Drehzahlsollwertvorgabe mit Ruckbegrenzung wird eine Begrenzung der Zahnkräfte erreicht, die zu einer weiteren Erhöhung der Sicherheit gegen Zahnbruch führt. Bisherige Antriebskonzepte basieren auf dem Einsatz von Gleichstrommotoren.

Als weitere besonders vorteilhafte Ausbildung der Erfindung ist vorgesehen, daß die Antriebsmotoren als Pulsumrichter gespeiste Drehstrommotoren ausgebildet sind. Hierdurch ergibt sich eine sehr vorteilhafte weitere Erhöhung der Betriebssicherheit des Antriebssystems, da Gleichstrommotoren gegenüber Drehstrommotoren wesentlich wartungsintensiver und anfälliger sind. Der Ausfall Von einzelnen Antriebsmotoren wird daher gegenüber den bekannten, mit Gleichstrommotoren arbeitenden Antriebssystemen erheblich herabgesetzt. Als Pulsumrichter kommen insbesondere die in der Zeitschrift "Siemens Energy & Automation" 3 (1989), Vol. IX beschriebenen Umrichter infrage.

Diese Umrichter sind unter dem Handelsnamen SIMOVERT-P-Umrichter im Handel und ergeben zusammen mit den erfindungsgemäßen digitalen Recheneinheiten Drehzahlanregelzeiten von ca. 60 ms. Diese Werte entsprechen denen eines analog geregelten Gleichstromantriebs.

An der digitalen Regelung ist weiterhin vorteilhaft, daß bei Ausfall von einem oder sogar zwei Motoren eine Drehzahlregelung mit einem Drehzahlregelkreis möglich ist, dessen Drehzahlparameter automatisch in Abhängigkeit von den verbleibenden Motoren adaptiert wird. Die Antriebsstabilität wird so wesentlich erhöht und auch bei einem Motorenausfall ein zufriedenstellender Weiterbetrieb erreicht. Vorteilhaft wird dabei eine automatische Betriebs-Zustandsanzeige vorgesehen, da die automatische Adaptierung ein sofortiges Erkennen des Motorausfalls verhindert.

Weitere Vorteile und Einzelheiten der Erfindung ergeben sich aus der nachfolgenden Beschreibung eines Ausführungsbeispiels, anhand der Zeichnung und in Verbindung mit den Unteransprüchen. Im einzelnen zeigen:

FIG 1    den prinzipiellen Aufbau der Regelung eines Vier-Motoren-Konverter Kippantriebes in Digital- und Drehstromtechnik,

FIG 2    ein Ersatzschaltbild eines Regelungskonzepts für zwei Motoren,

FIG 3    die Verspannungskennlinien der Motoren und

FIG 4    die Regelungsstruktur der Differenzdrehzahldämpfung.

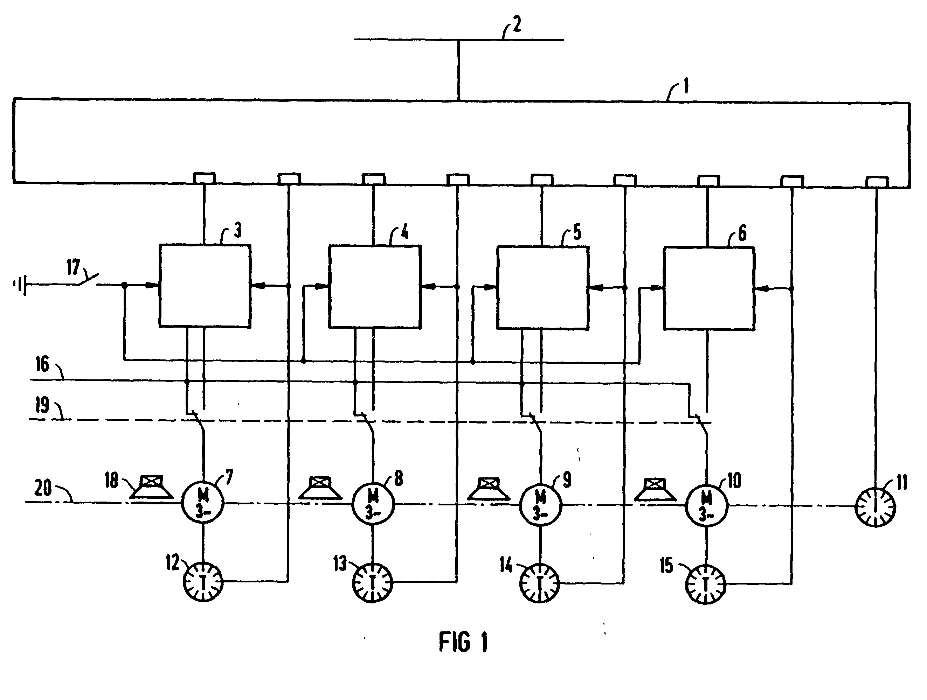

In FIG 1 bezeichnet 1 die ein- oder mehrteilig ausgebildete Recheneinheit für die digitale übergeordnete Regelung und Fahrschaltung. Die Recheneinheit 1 ist direkt an die Verbindung 2 zu externen Verriegelungen und zur Übermittlung von Fahrbefehlen angeschlossen. In der Recheneinheit wird die Regelung durchgeführt. Ihre Programmierung erfolgt vorzugsweise über bekannte Programmiereinheiten und durch freie Programmierung, z.B. für die Regelalgorithmen.

Die digitale übergeordnete Regelung und Fahrschaltung in der Recheneinheit 1 wirkt auf die Umrichter mit Netzrückspeisung 3,4,5 und 6, die an das Netz 16 angeschlossen sind und weiter auf die Antriebsmotoren 7,8,9 und 10. Die Umrichter 3,4,5 und 6 sind in bekannter Weise als Transistor; Thyristor oder GTO-Umrichter ausgebildet. Besonders geeignete Umrichter sind unter dem Handelsnamen "Simovert P" bekannt. Für einen Netzbetrieb bei Netzausfall weisen sie eine symbolisch dargestellte Batteriepufferung 17 auf.

Jeder Antriebsmotor 7,8,9 und 10 ist mit einer digitalen Tachomaschine 12,13,14 und 15 verbunden. Von diesen gehen Signale sowohl an die Einzelmotorregelkreise mit den Umrichtern 3,4,5 und 6 als auch über Digitaleinsätze an die Recheneinheit 1. Die Umrichter 3,4,5 und 6 sind über Schnittstellen mit der Recheneinheit 1 verbunden.

Die Antriebsmotoren 7,8,9 und 10 weisen außerdem eine Notbetriebsschaltung 19 und eine Bremsschaltung 20 auf, die auf die Bremsen 18 wirkt und mit dem digitalen Lagegeber 11 des Konverters verbunden ist. Die Notbetriebsschaltung 19 und die Bremsschaltung 20 sind in üblicher Weise ausgeführt.

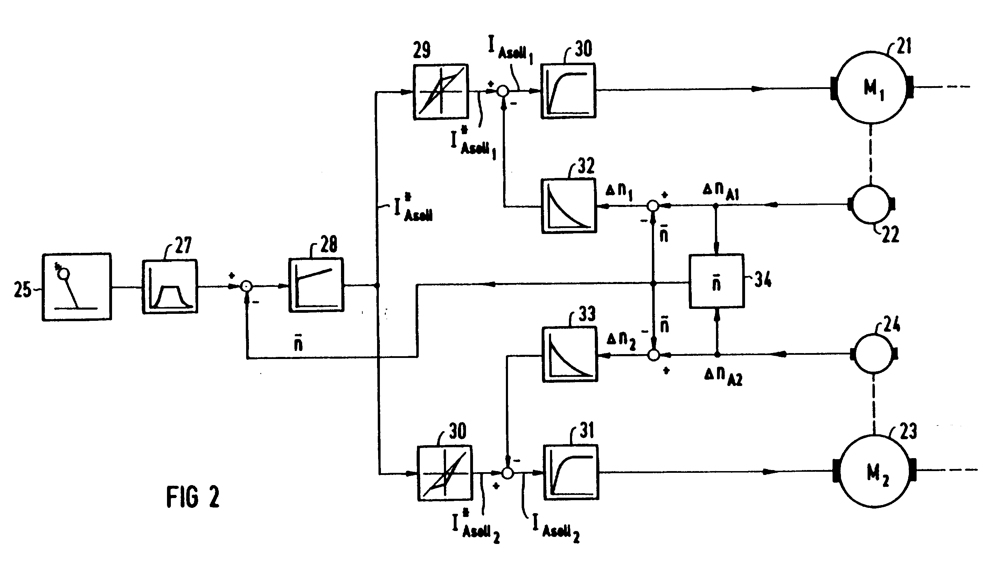

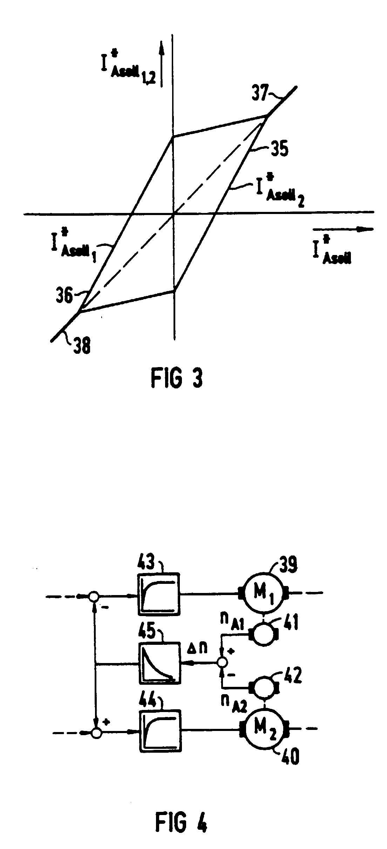

In FIG 2, die das Ersatzschaltbild einer Regelung für zwei Motoren darstellt, werden die beiden Antriebsmotoren 21 und 23 mit ihren digitalen Tachomaschinen 22 und 24 von dem Stellungs-Sollwertgeber 25 über die symbolisch dargestellten Regelfunktionen angesteuert. Der Stellungs-Sollwertgeber 25 erzeugt über gespeicherte Drehzahlsollwertverläufe, z.B. wie in 27 dargestellt, ein Signal für die Drehzahlregelung 28, das zunächst auf die Verspannungsregelung 29 und 30 wirkt. Eine Ruckbegrenzung im Hochlaufgeber mit einstellbarer Verschleifzeit erweist sich als wirksames Mittel zur Verringerung der Schwingungsneigung bei Kippvorgängen. Die Art der VerSpannungsregelung ist detailliert in FIG 3 dargestellt.

Aus den Verspannungsregelungen 29 und 30 führen die Signale zu den Stromregelungen 30 und 31 und von dort zu den Motoren 21 und 23. Die regelungstechnische Rückführung geschieht einmal von dem Summendrehzahlregelungsteil 34 auf den Eingang der Drehzahlregelung 28 und zum anderen von den digitalen Tachomaschinen 22 und 24 über die Differenzdrehzahl-Dämpfungsregelungen 32 und 33 auf die Eingänge der Stromregelungen 30 und 31. So ergeben sich die in der Recheneinheit 1 von FIG 1 digital realisierten Einzelregelungen.

In FIG 3 bezeichnet 35 die eine und 36 die andere Einzelkennlinie eines Zweimotorenantriebs mit Kennlinienspreizung während einer Drehmomentumkehr oder während der Stillstandsphasen. Anschließend an den Bereich der Drehmomentumkehr verlaufen die während der Drehmomentumkehr gegeneinander gespreizten Kennlinien gemeinsam als Kennlinien 37 oder 38 weiter. Durch diese, für analoge Regelungen an sich bekannte Maßnahme werden die zwischengeschalteten Getriebe geschont.

In FIG 4 ist eine besonders einfache Realisierung der Differenzdrehzahldämpfungsregelung näher gezeigt. Wie ersichtlich wirken die Signale der digitalen Tachomaschinen 41 und 42 der Motoren 39 und 40 mit ihrer Differenz auf die Stromregelungen 43 und 44 ein, die den Strom der Motoren 39 und 40 regeln. Dabei wird die Differenz der beiden Drehzahlen aus den digitalen Tachomaschinen 41 und 42 einer wählbaren Dämpfung in dem Glied 45 unterzogen. Es ergibt sich eine Differenzdrehzahldämpfung, die möglichst nahe an den Motoren angreift. Das in dem Differenzdrehzahlregelkreis erzeugte Signal wirkt jeweils auf den einen Motor verzögernd und auf den anderen Motor beschleunigend. So ergibt sich eine Annäherung der Drehzahlistwerte, deren Geschwindigkeit von der Dämpfungsfunktion, die getriebe- und massenverhältnisspezifisch eingestellt wird, abhängig ist. Die in FIG 4 gezeigte Regelungsstruktur eignet sich in entsprechend erweiterter Form auch für eine größere Zahl von Motoren, wobei der positive Effekt mit der gewünschten Unterdrückung der Schwingungen der Einzelmotoren gegeneinander erhalten bleibt.

Zusammenfassend ist zu bemerken, daß das Regelungskonzept, bei dem der überlagerte Drehzahlregler das gemeinsame Schwingen der Motoren gegen den Konverter dämpft, wobei dies durch die Drehzahlmittelwertbildung unterstützt wird, durch die Unterdrückung des Gegeneinanderschwingens der Motoren, das durch ungleiche Getriebelose und Elastizitäten in den Getrieben vergrößert wird, auch mit digitaler Signalverarbeitung in bisher unerreicht guter Weise arbeitet. Gegenüber einem Gleichstromantrieb mit Analogregelung ergeben sich insbesondere durch die Verwendung besserer Regelungsfunktionen, durch eine günstige Drehmomentausbildung und durch den Einsatz der robusten Drehstrommotoren eine erhebliche Erhöhung der Verfügbarkeit des Antriebs sowie eine bessere Einbindung in die Betriebsablaufsteuerung.

## Patentansprüche

1. Regelung für einen Konverterkippantrieb mit mehreren Antriebsmotoren und zugeordneten Tachomaschinen, die einen Summendrehzahlregelkreis der Antriebsmotoren als Führungskreis und unterlagerte einzelne Stromregelkreise sowie Motordifferenzdrehzahlregelkreise aufweist, **dadurch gekennzeichnet,** daß die Regelkreise in digitalen speicherprogrammierbaren Recheneinheiten (1) ausgebildet sind und daß eine Rückführung von den Tachomaschinen (12-15,22,24,41,42) über eine Differenzdrehzahldampfung (32,33,45) zwischen den einzelnen Antriebsmotoren (7-10,21,23,39,40) mit der Übertragungsfunktion

$$F_D(s)=K^* \frac{sTv}{1+sT_v}$$

auf die Eingange der Stromregelkreise (30, 31,43,44) vorhanden ist.

2. Regelung nach Anspruch 1, **dadurch gekennzeichnet,** daß die Recheneinheiten (1) als Vektorrecheneinheiten ausgebildet sind.

3. Regelung nach Anspruch 1 oder 2, **dadurch gekennzeichnet,** daß die Regelkreise digitale Sensoren, z. B. digitale Tachomaschinen (12-15), Drehwinkelgeber (11) aufweisen.

4. Regelung nach einem der vorangehenden Ansprüche, **dadurch gekennzeichnet,** daß die Einzelmotoren (7-10) zeitweilig gegeneinander wirkende Drehmoment-Sollwertkennlinien (35, 36) aufweisen.

5. Regelung nach einem der vorangehenden Ansprüche, **dadurch gekennzeichnet,** daß der übergeordnete Regelkreis eine digitale Drehzahlsollwertvorgabe (26,27) mit Ruckbegrenzung aufweist.

6. Regelung nach einem der vorhergehenden Ansprüche, **dadurch gekennzeichnet,** daß die Antriebsmotoren (7-10) als pulsumrichtergespeiste Drehstrommotoren ausgebildet sind.

7. Regelung nach einem der vorhergehenden Ansprüche, **dadurch gekennzeichnet,** daß sie einen Nothochlaufgeber und Notfunktionseinheiten aufweist.

8. Regelung nach einem der vorhergehenden Ansprüche, **dadurch gekennzeichnet,** daß sie einen Drehzahlregelkreis für einen Betrieb bei Motorenausfall aufweist, dessen Drehzahlregelparameter automatisch in Abhängigkeit von den verbleibenden Motoren adaptiert wird.

9. Regelung nach einem der vorhergehenden Ansprüche, **dadurch gekennzeichnet,** daß sie eine digitale Leitungs- und Funktionsüberwachung aufweist.

10. Regelung nach Anspruch 6 in Verbindung mit einem der vorhergehenden Ansprüche, wobei die Pulsumrichter der Antriebe eine Netzrückspeisung aufweisen.

11. Regelung nach Anspruch 6 in Verbindung mit einem der vorhergehenden Ansprüche, wobei die Pulsumrichter (3,4,5,6) der Antriebe eine Batteriepufferung aufweisen.

## Claims

1. Control for a converter tilting drive having a plurality of drive motors and associated tachogenerators, which control has a total speed control circuit of the drive motors as a reference circuit and subordinate individual current control circuits and also motor differential speed control circuits, characterised in that the control circuits are formed in digital stored-program arithmetic units (1) and in that feedback from the tacho-generators (12-15, 22, 24, 41, 42) is provided by way of differential speed damping (32, 33, 45) between the individual drive motors (7-10, 21, 23, 39, 40) with the transfer function

$$F_D(s)=K^* \frac{sTv}{1+sT_v}$$

to the inputs of the current control circuits (30, 31, 43, 44).

**2.** Control according to claim 1, characterised in that the arithmetic units (1) are formed as vector arithmetic units.

**3.** Control according to claim 1 or 2, characterised in that the control circuits have digital sensors, for example digital tacho-generators (12-15), rotation angle transmitter (11).

**4.** Control according to one of the preceding claims, characterised in that the individual motors (7-10) have temporarily counteracting rated torque value characteristics (35, 36).

**5.** Control according to one of the preceding claims, characterised in that the higher-order control circuit has a digital rated speed value input (26, 27) with rate-of-change limitation.

**6.** Control according to one of the preceding claims, characterised in that the drive motors (7-10) are formed as pulse converter-fed three-phase motors.

**7.** Control according to one of the preceding claims, characterised in that it has an emergency acceleration rate limiter and emergency functional units.

**8.** Control according to one of the preceding claims, characterised in that it has a speed control circuit for operation in the case of motor failure, the speed control parameter of which control circuit is automatically adapted as a function of the remaining motors.

**9.** Control according to one of the preceding claims, characterised in that it has digital line-monitoring and function-monitoring.

**10.** Control according to claim 6 in conjunction with one of the preceding claims, wherein the pulse converters of the drives have current regeneration.

**11.** Control according to claim 6 in conjunction with one of the preceding claims, wherein the pulse converters (3, 4, 5, 6) of the drives have a battery back-up.

## Revendications

**1.** Régulation pour un dispositif d'entraînement de basculement d'un convertisseur comportant plusieurs moteurs d'entraînement et des machines tachymétriques associées, qui comporte un circuit de régulation de la somme des vitesses de rotation des moteurs d'entraînement en tant que circuit de pilotage et qui comporte des circuits individuels subordonnés de régulation de courant ainsi que des circuits de régulation de la vitesse différentielle du moteur,
caractérisée en ce que les circuits de régulation sont réalisés sous la forme d'unités numériques de calcul (1) susceptibles d'être programmées par mémoire, et en ce qu'il est prévu une réaction des machines (12-15,22,24,41,42) tachymétriques par un amortissement (32, 33, 35) de la vitesse de rotation différentielle entre les différents moteurs de commande (7 à 10), suivant la fonction de transfert :

$$F_D(s)=K^* \frac{sTv}{1+sT_v}$$

sur les entrées des circuits de régulation.

**2.** Régulation suivant la revendication 1, caractérisée en ce que les unités de calcul (1) sont formées en tant qu'unités de calcul vectoriel.

**3.** Régulation suivant la revendication 1 ou 2, caractérisée en ce que les circuits de régulation comportent des détecteurs numériques, par exemple des machines tachymétriques numériques (12 à 15), et des générateurs d'écarts angulaires (11).

**4.** Régulation suivant l'une revendications précédentes,
caractérisée en ce que les moteurs individuels (7 à 10) présentent des courbes caractéristiques (35, 36) valeur de consigne - moment de rotation agissant temporairement de manière opposée.

**5.** Régulation suivant l'une des revendications précédentes,
caractérisée en ce que le circuit de régulation amont comporte un élément (26, 27) numérique de valeur de consigne de la vitesse et à limitation en retour.

**6.** Régulation suivant l'une des revendications précédentes, caractérisée en ce que les moteurs de commande (7 à 10) sont formés en tant que moteurs triphasés alimentés par convertisseurs à impulsions.

**7.** Régulation suivant l'une des revendications précédentes, caractérisée en ce qu'elle comporte un générateur d'accélération de secours et des unités de fonctionnement de secours.

**8.** Régulation suivant l'une des revendications précédentes, caractérisée en ce qu'elle comporte un circuit de régulation de la vitesse pour un fonctionnement dans le cas d'un défaut de moteur, dont le paramètre de régulation de la vitesse est automatiquement adapté en fonction des autres moteurs.

**9.** Régulation suivant l'une des revendications précédentes, caractérisée en ce qu'elle comporte un contrôle numérique des lignes et un contrôle numérique fonctionnel.

**10.** Régulation suivant la revendication 6 en liaison avec l'une des revendications précédentes, du type dans laquelle les convertisseurs à impulsions des entraînements comportent une récupération.

**11.** Régulation suivant la revendication 6 en liaison avec l'une des revendications précédentes, du type dans laquelle les convertisseurs à impulsions (3, 4, 5, 6) des entraînements comportent une unité tampon à batterie.

FIG 1

FIG 2

FIG 3

FIG 4